Europäisches Patentamt

European Patent Office

Office européen des brevets

(19)

(11) EP 0 818 754 A1

(12) DEMANDE DE BREVET EUROPEEN

(43) Date de publication:
14.01.1998 Bulletin 1998/03

(51) Int Cl.$^6$: G06T 11/00

(21) Numéro de dépôt: 97401662.8

(22) Date de dépôt: 10.07.1997

(84) Etats contractants désignés:
AT BE CH DE DK ES FI FR GB GR IE IT LI LU MC
NL PT SE

(30) Priorité: 12.07.1996 FR 9608745

(71) Demandeur: COMMISSARIAT A L'ENERGIE
ATOMIQUE
75015 Paris Cédex 15 (FR)

(72) Inventeurs:
• La Valérie
38000 Grenoble (FR)

• Grangeat, Pierre
38330 Saint-Ismier (FR)
• Iovleff, Serge
75019 Paris (FR)

(74) Mandataire: Ilgart, Jean-Christophe et al
c/o Société Brevatome,
25, rue de Ponthieu
F-75008 Paris (FR)

(54) Procédé d'estimation d'une fonction d'image par itérations

(57) On décrit un procédé d'estimation itérative d'une fonction d'image f à partir d'une série de mesures m en utilisant un algorithme de type gradient conjugué permettant d'inverser une équation du type Af=m. Selon l'invention, on ne cherche pas à symétriser la matrice A avant d'appliquer le procédé, ce qui est jusqu'à présent tenu pour nécessaire afin d'assurer la convergence de l'algorithme, mais on cherche à rendre le système d'équations de mesure quasi-symétrique en appliquant un opérateur de préconditionnement adapté. On peut alors appliquer un algorithme de reconstruction itératif cherchant à minimiser la norme du résidu et où la mise à jour des directions de descente est faite suivant les résidus et non suivant les gradients. La convergence de l'estimation est alors sauvegardée, et elle est bien plus rapide.

FIG. 1

EP 0 818 754 A1

## Description

La présente invention concerne un procédé d'estimation d'une fonction d'image par voie itérative à partir de mesures. Cette invention s'inscrit dans le domaine technique de la reconstruction d'images en tomographie.

Les techniques tomographiques permettent d'accéder à la distribution spatiale tridimensionnelle d'un paramètre particulier d'un objet ou d'un organe en procédant à une reconstruction de son image à partir d'un jeu de projections bidimensionnelles acquises autour de l'objet ou de l'organe. En tomographie par transmission aux rayons X, le paramètre reconstruit est le coefficient d'atténuation linéaire du rayonnement à travers l'objet, qui est indicateur de la densité du matériau ou du tissu. En tomographie d'émission, on calcule l'activité locale d'émission de l'objet. L'information recueillie est de type morphologique ou structurel dans le premier cas, et de type fonctionnel dans le second.

L'intérêt de l'invention est plus grand dans le second cas, et notamment en tomographie d'émission monophotonique (TEMP) sur laquelle portera plus particulièrement la description qui suit, quoique d'autres applications de l'invention soient possibles. La technique d'émission monophotonique utilise un produit radioactif qui se fixe dans l'organe après avoir été injecté au patient. A partir des mesures du rayonnement γ émis, qui sont effectuées selon plusieurs incidences, la distribution du radio-élément émetteur est calculée. Le problème à résoudre est alors de reconstruire l'image de l'objet à partir des projections acquises. Nous nous plaçons ici dans le cadre d'une géométrie d'acquisition parallèle mais la résolution du problème est applicable aux géométries en éventail et conique, voire aux géométries plus complexes dans le cas des scanners hélicoïdaux à rotation continue. C'est seulement dans la mise en oeuvre du procédé qu'intervient la géométrie considérée.

Le problème de la reconstruction en tomographie d'émission monophotonique est plus complexe qu'en tomographie aux rayons X car les mesures sont dégradées par le phénomène d'atténuation des photons γ par les différents tissus traversés. A cela s'ajoutent d'autres facteurs néfastes à la reconstruction tels que le rayonnement diffusé, le flou introduit par la réponse impulsionnelle du détecteur, etc.

L'accès à une information quantitative précise sur l'activité du radio-élément est donc difficile et nécessite des techniques de reconstruction prenant en compte les différents facteurs de dégradation. Nous ne considérerons ici que le phénomène d'atténuation, mais l'approche peut être généralisée en incorporant les autres effets dans un opérateur matriciel Rμ, qui est un opérateur de projection atténuée modélisant le processus d'acquisition. Concrètement, un opérateur de projection est une relation d'association des points de l'objet aux points de mesure des détecteurs, exprimant la probabilité qu'une mesure non nulle soit réalisée en un point des détecteurs quand un photon est émis d'un point de l'objet, et l'atténuation apparaît sous forme d'une réduction de ces probabilités.

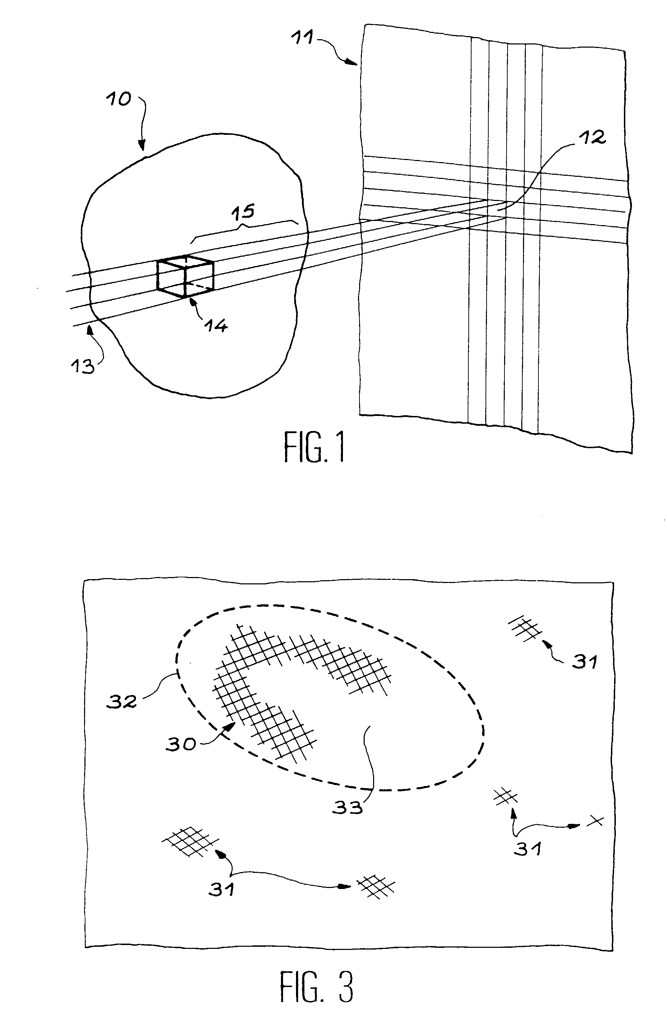

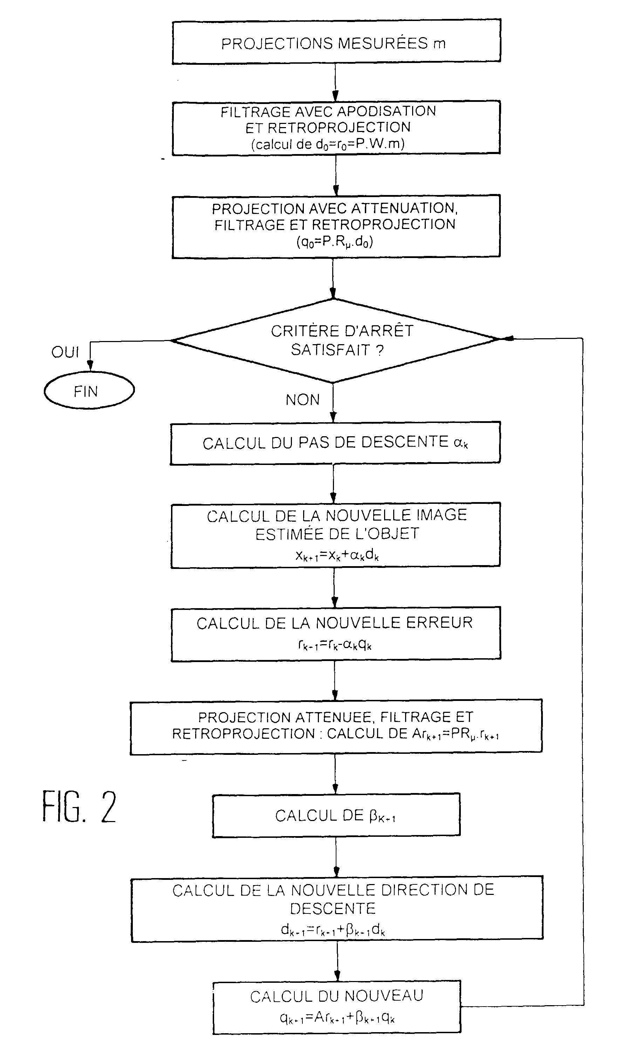

Cela peut être mieux expliqué à l'aide de la figure 1, où l'objet est désigné par la référence 10 et où un réseau bidimensionnel 11 de détecteurs 12 est orienté vers l'objet 10 pour recueillir une image de celui-ci en projection. Le réseau bidimensionnel 11 est en pratique promené autour de l'objet 10 pour prendre une série d'images à des incidences différentes, dont la collection permet de reconstruire l'image tridimensionnelle de l'objet 10.

Le procédé décrit dans ce brevet s'appliquerait aussi dans le cas où le réseau de détecteurs 12 serait unidimensionnel et où l'on chercherait à imager simplement un plan de coupe bidimensionnel.

Le rayon de scrutation 13 d'un des détecteurs 12 a été figuré ; il traverse l'objet 10 et passe en particulier par un point 14 de celui-ci, ou plus concrètement par un petit volume autour de ce point 14. Si un photon est émis de ce petit volume, l'opérateur de projection exprime la probabilité que ce photon atteigne le détecteur 12 particulier et ne quitte donc pas le rayon de scrutation 13 ; l'atténuation exprime la probabilité que le photon soit absorbé dans la partie 15 du rayon de scrutation 13 incluse dans l'objet 10 du point 14 vers le détecteur 12.

Le problème de la reconstruction d'image à partir de projections atténuées peut alors être exprimé par l'équation $R_\mu f + b = m$ (1), où f désigne l'image de l'objet, m les mesures, et b le bruit des mesures.

Les méthodes d'intégration de l'atténuation aux procédés usuels de reconstruction sont nombreuses et peuvent notamment impliquer une expérience préalable avec une mesure de transmission ou une tomographie antérieure pour relever les caractéristiques d'atténuation et corriger ainsi l'opérateur de projection non atténuée R pour obtenir l'opérateur $R_\mu$ ; parfois, on accepte aussi d'ignorer purement et simplement l'atténuation et de se contenter d'une reconstruction imprécise de l'image, afin d'échapper aux difficultés de reconstructions signalées plus loin quand on tient compte de l'atténuation.

Le problème posé, une fois l'opérateur de projection atténuée $R_\mu$ connu, équivaut à inverser l'équation $R_\mu f = m$ (1') pour déduire l'image de l'objet f, mais la grandeur de la matrice $R_\mu$ rend une inversion directe impossible.

Il existe ce qu'on appelle des méthodes d'inversion analytiques, qui consistent à appliquer une formule mathématique dite d'inversion aux mesures m pour obtenir finalement l'image, sans recourir à la matrice $R_\mu$ ni la manipuler. Certaines améliorations à ces méthodes ont déjà été proposées par l'un des inventeurs et décrites dans plusieurs brevets et d'abord dans le brevet européen 0 292 402. Cependant, le recours à des méthodes analytiques est impossible dans le cas d'une atténuation non uniforme à l'intérieur de l'objet.

C'est pourquoi on s'intéresse ici aux méthodes algébriques d'inversion de l'équation (1'), dans lesquelles cette équation est effectivement considérée comme système d'équations linéaires dont on cherche la solution. L'impossibilité d'une inversion directe oblige à recourir à des méthodes algébriques itératives qui imposent en pratique des temps de calcul sensiblement plus longs qu'avec les méthodes analytiques. L'objet de l'invention consistera à trouver une méthode qui permette de converger vers la solution en un nombre d'itérations beaucoup plus petit qu'avec les procédés antérieurs. Il faudra de plus s'assurer que la convergence sera bien obtenue, afin de justifier l'intérêt de l'invention par rapport à des procédés rapides mais qui ne convergent pas toujours en pratique.

Plus précisément, l'invention est une amélioration de procédés qui recourent à l'algorithme du gradient conjugué, d'ailleurs un des plus fréquemment employés dans les réalisations connues des méthodes algébriques, et dans lequel l'erreur quadratique $\|m-R_\mu f\|^2$ de résolution de l'équation (1') est minimisée. La mise à jour de l'image estimée de l'objet f, d'une itération k à la suivante k+1, est exprimée par la formule (2) :

$$f_{k+1}=f_k+\alpha_k d_k \qquad (2)$$

où $\alpha_k$ est le pas de descente dans la direction de descente $d_k$. Le choix des directions successives de descente $d_k$ est tel que la convergence de l'algorithme est assurée en au plus N itérations, N étant la dimension de l'image f exprimée sous forme d'un vecteur.

En pratique, la convergence est plus rapide mais on est toutefois gêné par la condition que le procédé normal du gradient conjugué ne s'applique normalement qu'avec des matrices symétriques, faute de quoi la convergence n'est plus assurée en un nombre fini d'itérations : on ne résout donc pas directement l'équation (1'), mais l'équation (3) qui suit, dans laquelle les deux membres de l'équation (1') ont été multipliés par l'opérateur $R_\mu^t$ qui permet d'obtenir une matrice $R_\mu^t R_\mu$ symétrique.

$$R_\mu^t R_\mu f = R_\mu^t m \qquad (3).$$

Certains auteurs ont amélioré le procédé décrit jusqu'à présent pour rendre la convergence plus rapide grâce à un opérateur de pré-conditionnement P, et ils résolvent alors l'équation $R_\mu^t R_\mu f = PR_\mu^t m$ (4). En pratique, on utilise comme opérateurs de pré-conditionnement P soit des matrices diagonales, soit des matrices correspondant à des filtres, et l'algorithme converge alors en environ vingt itérations au lieu de quatre-vingts dans des situations courantes. Ou encore, l'opérateur de préconditionnement P est appliqué avant la symétrisation de la matrice, ce qui revient à obtenir le système correspondant à l'équation $PR_\mu f=Pm$ (5), et c'est le système symétrisé correspondant à l'équation $R_\mu^t P^t PR_\mu f = R_\mu^t P^t Pm$ (6) qui est alors résolu. Les opérateurs de préconditionnement P sont ici des opérateurs approchant l'inverse de $R_\mu$. C'est ce deuxième type de préconditionnement auquel nous nous intéressons. Le bénéfice quant au nombre d'itérations nécessaires pour la convergence est à peu près le même dans les deux cas. Cependant, on reste très éloigné des performances d'autres méthodes, appelées hybrides car elles cumulent la reconstruction analytique et la résolution par itérations, la mise à jour progressive de l'image estimée étant donnée par l'équation $f_{k+1}=f_k+\lambda_k P(m-R_\mu f_k)$ (7), où $\lambda_k$ est un paramètre de relaxation strictement positif et P un opérateur approchant l'inverse de $R_\mu$. La convergence de l'image estimée, qui est d'autant plus rapide que le produit $PR_\mu$ est proche de l'identité à un facteur près, est obtenue en deux ou trois itérations. On souhaite donc obtenir une aussi bonne efficacité, quoiqu'on ne veuille appliquer ces méthodes hybrides qui présentent l'inconvénient sérieux de ne pas converger dans tous les cas, notamment quand l'acquisition n'est faite que sur 180 degrés autour de l'objet 10. L'acquisition sur 180 degrés est le protocole d'acquisition le plus répandu en imagerie cardiaque, de façon à se restreindre aux acquisitions les moins atténuées. D'où l'importance de développer un procédé rapide adapté.

On a démontré que l'algorithme du gradient conjugué appliqué à un système à résoudre Ax=b, où A est une matrice symétrique positive, convergeait pour une réduction donnée de l'erreur en un nombre d'itérations proportionnel à $\sqrt{K(A)}$, où K(A) est le conditionnement de la matrice A, c'est-à-dire le rapport de la plus grande valeur propre sur la plus petite. Comme dans le cas présent la matrice correspondant à A, c'est-à-dire $R_\mu$, n'est pas symétrique, le recours à la symétrisation du problème, exprimé par l'équation (3), implique que la convergence sera obtenue en un nombre itérations proportionnel à $\sqrt{K(A^t.A)}$, c'est-à-dire $\sqrt{K(A)}^2$ ou encore $|K(A)|$. Comme $|K(A)|$ est plus grand que 1, on s'aperçoit de l'aggravation ainsi obtenue. Dans le cas d'un préconditionnement par une matrice P, exprimé aux équations (5) et (6), le conditionnement de la matrice du système à résoudre est finalement $K(PA)^2$, ce qui n'est normalement guère plus important que K(PA) si P est très proche de l'inverse de A. Cela explique pourquoi le préconditionnement par la matrice P accélère la vitesse de convergence malgré le besoin de symétriser la matrice de l'équation à résoudre. Cependant, une vitesse de convergence encore plus importante est encore souhaitée quand P n'approche que très approximativement l'inverse de A.

Une méthode digne d'attention consisterait à chercher une matrice de pré-conditionnement P qui serait aussi proche que possible de l'inverse de la matrice A, car leur produit serait alors proche de la matrice identité, qui est la mieux conditionnée puisque toutes ses valeurs propres sont égales. Mais il est difficile de trouver effectivement des matrices de pré-conditionnement plus convenables que celles qui existent.

C'est pourquoi une méthode différente a été choisie, dans laquelle on applique un algorithme de type gradient conjugué sans passer par les équations normales, exprimées en particulier par la formule (3) précédente, où la matrice qui doit être inversée est symétrisée.

L'invention concerne alors un procédé d'estimation itérative d'une fonction d'image f à partir de mesures m en utilisant une méthode de type gradient conjugué, caractérisé en ce que la fonction d'image est obtenue par des estimations successives $f_k$ en minimisant toujours plus une erreur $r_k$ de résolution d'une équation $P.R_\mu.f_k=P.m$ ou $P.R_\mu.f_k=P.W.m$, où $R_\mu$ est un opérateur matriciel de projection de l'image sur des plans de mesure, W est un opérateur matriciel de prétraitement des mesures et P est un opérateur matriciel de préconditionnement tel que $P.R_\mu$ puisse être traité comme une matrice quasi symétrique. Ceci sera vérifié en particulier si P est choisi de façon à approcher l'inverse de $R_\mu$.

Il n'est pas inconcevable d'utiliser l'algorithme du gradient conjugué pour des matrice asymétriques, mais la convergence de l'algorithme n'est alors plus assurée en un nombre fini d'itérations. L'originalité de l'invention réside dans la mise en forme du système à résoudre de façon à se ramener à une matrice quasi-symétrique et dans le choix d'un algorithme de type gradient conjugué qui s'applique directement à un système quasi-symétrique, ce qui supprime la dégradation de la vitesse de convergence causée par la symétrisation. Le nouvel algorithme permet d'assurer la convergence de l'algorithme pour des matrices quasi symétriques, c'est-à-dire qui peuvent être écrites comme la somme d'une matrice symétrique et d'une matrice antisymétrique dont les éléments sont de valeur relativement faible devant ceux de la matrice symétrique.

La minimisation de l'erreur résiduelle consiste en ce que, si le système à résoudre est Ax=b, on minimise à chaque itération le résidu IIb-AxII$^2$. Le nouvel algorithme est un algorithme de descente qui, à chaque itération, réalise deux opérations majeures : 1) calcul du pas de descente optimal, 2) calcul de la nouvelle direction de descente. Le pas de descente optimal est celui qui minimise le résidu IIb-AxII$^2$ dans la direction de descente courante, comme dans l'algorithme du gradient conjugué appliqué à une matrice A non symétrique. Le pas étant déterminé, on obtient alors une nouvelle estimation $x_{k+1}$ de la solution. La nouvelle direction de descente est calculée à partir de la direction de descente courante et du résidu au nouveau point $x_{k+1}$ et non du gradient en $x_{k+1}$ comme c'est le cas dans le gradient conjugué.

L'algorithme complet de résolution du système est alors donné par le tableau I :

TABLEAU I

$$x_0, r_0 = b - Ax_0, d_0 = r_0, q_0 = Ad_0$$

$$\alpha_k = \frac{r_k^t q_k}{q_k^t q_k}$$

$$x_{k+1} = x_k + \alpha_k d_k$$

$$r_{k+1} = r_k - \alpha_k q_k$$

$$\beta_{k+1} = -\frac{(Ar_{k+1})^t q_k}{q_k^t q_k}$$

$$d_{k+1} = r_{k+1} + \beta_{k+1} d_k$$

$$q_{k+1} = Ar_{k+1} + \beta_{k+1} q_k$$

Le procédé est arrêté quand la convergence est jugée suffisante ou après un nombre déterminé d'itérations.

L'équation écrite plus haut : Ax=b, peut être identifiée à l'équation (5) qu'on rappelle ici : $PR_\mu f=Pm$. Pm correspond donc à b et $PR_\mu$ à A : $x_k$ du tableau I correspond donc à l'estimée de l'image à l'itération k, et $r_k$ au résidu ou à l'erreur de l'équation Ax=b, c'est-à-dire que $r_k=b-Ax_k$. $x_0$ peut être choisi à volonté, égal à zéro par exemple. La grandeur $d_k$ est la direction de descente, et deux directions de descente successives sont conjuguées par rapport au produit $A^tA$, ce qu'on peut écrire $(d_{k+1}, A^tAd_k)=0$. De plus, les résidus $r_k=b-Ax_k$ sont conjugués par rapport à A d'une itération à l'autre, c'est-à-dire que $(r_{k+1}, Ar_k)=0$. Dans la méthode classique du gradient conjugué, les directions de descente sont aussi conjuguées par rapport à $A^tA$ mais les résidus successifs sont conjugués par rapport à $AA^t$ au lieu de A comme ici. Cette différence explique que la convergence soit sensiblement plus lente qu'avec l'invention.

Il n'est besoin que d'enregistrer les vecteurs $x_k$, $r_k$, $d_k$, $Ar_k$ et $q_k$ en mémoire à chaque itération ; c'est-à-dire un de plus seulement que dans l'algorithme classique du gradient conjugué. La matrice A n'intervient que dans le calcul du produit Ark.

La matrice A, identifiée à $PR_\mu$, doit donc être quasi symétrique. On préfère d'ailleurs que le produit $P.R_\mu$ soit proche de l'identité et ainsi bien conditionné ($K(P.R_\mu)$ proche de 1). Un opérateur matriciel convenable consiste à choisir $P=R^{-1}$, R étant la matrice de projection non atténuée, c'est-à-dire $P=R^t(HD)$, où HD est un filtre rampe et $R^t$ représente l'opérateur de rétroprojection non atténuée. De plus, on peut choisir de prétraiter les mesures par un filtrage passe-bas, représenté par une matrice W, pour atténuer le bruit, ou de réaliser un lissage spatial de l'image estimée afin d'atténuer le bruit et les erreurs numériques sur les images estimées. Le système à résoudre est alors légèrement plus compliqué ; il est donné par l'expression $(PR_\mu+\lambda C^tC)f=PWm$ (8) où $C^tC$ est par exemple la matrice associée au laplacien tridimensionnel ou, d'une manière générale, un opérateur différentiel de régularisation qui par exemple attribue un poids plus important aux hautes fréquences ou aux fréquences que l'on souhaite éliminer.

Le lissage spatial proposé ici est ce qu'on appelle une contrainte de douceur sur l'image, où les variations d'intensité de l'image estimée entre des points voisins sont calculées ; l'application de cette contrainte de douceur tend à modifier les images estimées successives en atténuant les variations d'intensité trop importantes entre des points voisins. On constate que les effets du bruit sont très réduits sur les images finalement obtenues.

La figure 2 est un organigramme où le présent procédé, et en particulier l'ordre des étapes, est exposé plus nettement. On a supposé ici que l'image estimée initiale fo vaut 0 et que P est l'opérateur de filtrage-rétroprojection $R^{-1}$. De plus, le lissage spatial de l'image n'a pas été inclus.

La méthode présentée est, par rapport au graident conjugué, plus rapide mais moins robuste. Ceci entraîne d'utiliser des lissages plus importants qui dégradent le contraste sur le contour des objets. Aussi, on propose de diviser l'image en deux parties, l'une correspondant à la région d'intérêt et l'autre au fond, et de traiter différemment ces deux parties. Différents algorithmes peuvent être utilisés pour cette segmentation. Nous en détaillerons un comme exemple. Dans le cas où l'objet examiné est un coeur, on doit déterminer la région d'intérêt, c'est-à-dire la partie de l'image qui est supposée englober cet objet. Celle-ci est définie comme l'ensemble des points dont l'émission est fixée à au moins 35% du maximum d'activité observé sur l'image ; on trouve généralement que cette partie est formée de plusieurs morceaux, dont les plus petits ne sont redevables qu'à de fausses détections dues au bruit et aux artéfacts de reconstruction. C'est pourquoi les morceaux d'image fortement émetteurs et trop petits dont la surface est inférieure à une fraction de celle du morceau le plus important de segmentation sont écartées et rattachées au fond de l'image. D'autres morceaux d'image fortement émetteurs mais de taille non négligeable proviennent du foie. Ils sont également rattachés au fond en utilisant un critère de discrimination basé sur la position des morceaux. Cette méthode s'est montrée adéquate en particulier pour des coeurs sains ou faiblement pathologiques. De plus, si on veut être sûr d'englober tout l'objet dans le ou les morceaux d'image détachés du fond par le procédé précédent, on peut agrandir conventionnellement ces morceaux d'image en ajustant autour d'eux une enveloppe de taille suffisamment grande. Si l'objet est un coeur, l'enveloppe choisie peut être un ellipsoïde dont la forme inscrite correspond à celle qui est estimée pour le coeur sur l'image et dont la surface est un peu plus grande.

Une fois que la segmentation de l'image a été réalisée, on peut appliquer la méthode déjà mentionnée avec un lissage faible ($\lambda$ proche de 0 dans l'équation (8)) à la portion de l'image comprenant le coeur et un lissage beaucoup plus élevé ($\lambda$ proche de 1) pour le fond de l'image.

La figure 3 illustre ainsi une coupe de l'image reconstruite, où le morceau d'image 30 correspond à l'image de l'objet et les autres morceaux d'image 31 sont des artéfacts éliminés par leur petite surface ; 32 désigne l'ellipsoïde placé par le programme autour du morceau d'image 30 afin d'isoler la zone 33 au lissage faible du fond de l'image, où le lissage plus poussé permet d'atténuer les artéfacts 31.

Des résultats expérimentaux ont été obtenus : ils montrent que le procédé conforme à l'invention permet d'obtenir des images aussi bonnes qu'avec les algorithmes ordinaires de gradient conjugué, mais avec un nombre d'itérations au moins deux fois plus petit, et souvent quatre fois. Cette diminution du temps de calcul a une importance énorme pour les procédés tomographiques à émission monophotonique (TEMP) dont l'emploi est précisément entravé par le volume des calculs nécessaires.

On rappelle ci-dessous la listes des figures utilisées pour illustrer le texte de cette demande :

- la figure 1 est une représentation de certains éléments appartenant au domaine de l'invention ;
- la figure 2 est un organigramme du procédé ;
- et la figure 3 illustre une technique d'amélioration de l'image reconstruite.

**Revendications**

1. Procédé d'estimation itérative d'une fonction d'image f à partir de mesures m en utilisant une méthode de type gradient conjugué, caractérisé en ce que la fonction d'image est obtenue par des estimations successives $f_k$ en minimisant toujours plus une erreur $r_k$ de résolution d'une équation $P.R_\mu.f_k=P.m$, où $R_\mu$ est un opérateur matriciel de projection de l'image sur des espaces de mesure et P est un opérateur matriciel de préconditionnement tel que $P.R_\mu$ puisse être traité comme une matrice quasi symétrique.

2. Procédé d'estimation itérative d'une focntion d'image selon la revendication 1, caractérisé en ce que la fonction d'image est obtenue par des estimations successives $(f_k)$ en minimisant à chaque itération l'erreur $r_k$ à l'aide d'un algorithme de descente où une mise à jour de directions de descente est faite en utilisant une erreur précédente et une direction de descente précédente.

3. Procédé d'estimation itérative d'une fonction d'image selon la revendication 2, caractérisé en ce qu'il consiste à résoudre de façon répétée pour des itérations k les équations suivantes, où $A=P.R_\mu$ :
   $x_0$ choisi à volonté,

$$r_0 = b - Ax_0, d_0 = r_0, q_0 = Ad_0$$

$$\alpha_k = \frac{r_k^t q_k}{q_k^t q_k}$$

$$x_{k+1} = x_k + \alpha_k d_k$$

$$r_{k+1} = r_k - \alpha_k q_k$$

$$\beta_{k+1} = -\frac{(Ar_{k+1})^t q_k}{q_k^t q_k}$$

$$d_{k+1} = r_{k+1} + \beta_{k+1} d_k$$

$$q_{k+1} = Ar_{k+1} + \beta_{k+1} q_k$$

4. Procédé d'estimation itérative d'une fonction d'image selon l'une quelconque des revendications 1, 2 ou 3, caractérisé en ce que $R_\mu$ est un opérateur matriciel intégrant une atténuation des projections consécutive à l'absorption d'un rayonnement et P est égal à un opérateur matriciel $R^{-1}$ inverse d'un opérateur matriciel R de projection de l'image sur les espaces de mesure en ignorant l'atténuation des projections.

5. Procédé d'estimation itérative d'une fonction d'image selon l'une quelconque des revendications 1 à 4, caractérisé en ce qu'il comprend un prétraitement des mesures (m) par un opérateur matriciel de lissage (W) de façon à atténuer le bruit sur les mesures, l'équation à résoudre étant alors $PR_\mu f=PWm$.

6. Procédé d'estimation itérative d'une fonction d'image selon l'une quelconque des revendications 1 à 5, caractérisé en ce qu'il comprend un lissage des estimations $(f_k)$ de l'image de nature à atténuer le bruit sur les estimations.

7. Procédé d'estimation itérative d'une fonction d'image selon la revendication 6, caractérisé en ce que le lissage des estimations $(f_k)$ est effectué en régularisant l'opérateur $PR_\mu$ par l'ajout d'un opérateur différentiel $(\lambda C^t C)$.

8. Procédé d'estimation itérative d'une fonction d'image selon l'une quelconque des revendications 6 ou 7, caractérisé en ce qu'il comprend une segmentation de l'image en morceaux d'image, le lissage des estimations ($f_k$) étant entrepris différemment pour chacun des morceaux.

FIG. 1

FIG. 3

PROJECTIONS MESURÉES m

↓

FILTRAGE AVEC APODISATION
ET RETROPROJECTION
(calcul de $d_0=r_0=P.W.m$)

↓

PROJECTION AVEC ATTENUATION,
FILTRAGE ET RETROPROJECTION
($q_0=P.R_\mu.d_0$)

↓

CRITÈRE D'ARRÊT
SATISFAIT ?

OUI → FIN

NON ↓

CALCUL DU PAS DE DESCENTE $\alpha_k$

↓

CALCUL DE LA NOUVELLE IMAGE
ESTIMÉE DE L'OBJET
$x_{k+1}=x_k+\alpha_k d_k$

↓

CALCUL DE LA NOUVELLE ERREUR
$r_{k-1}=r_k-\alpha_k q_k$

↓

PROJECTION ATTENUEE, FILTRAGE ET
RETROPROJECTION : CALCUL DE $Ar_{k+1}=PR_\mu.r_{k+1}$

↓

FIG. 2

CALCUL DE $\beta_{k+1}$

↓

CALCUL DE LA NOUVELLE DIRECTION DE
DESCENTE
$d_{k-1}=r_{k-1}+\beta_{k-1}d_k$

↓

CALCUL DU NOUVEAU
$q_{k-1}=Ar_{k-1}+\beta_{k-1}q_k$

9

EP 0 818 754 A1

**Office européen des brevets**

**RAPPORT DE RECHERCHE EUROPEENNE**

Numero de la demande

EP 97 40 1662

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | BOOTH S D ET AL: "COMBINED DIAGONAL/FOURIER PRECONDITIONING METHODS FOR IMAGE RECONSTRUCTION IN EMISSION TOMOGRAPHY" PROCEEDINGS OF THE INTERNATIONAL CONFERENCE ON IMAGE PROCESSING (ICIP), WASHINGTON, OCT. 23 - 26, 1995, vol. 2, 23 octobre 1995, INSTITUTE OF ELECTRICAL AND ELECTRONICS ENGINEERS, pages 441-444, XP000624002 * page 441, alinéa 1 * | 1 | G06T11/00 |
| A | US 5 414 623 A (LU TONGXIN ET AL) 9 mai 1995 * colonne 12, ligne 10 - colonne 13, ligne 33 * | 1 | |

**DOMAINES TECHNIQUES RECHERCHES (Int.Cl.6)**

G06T

Le présent rapport a été établi pour toutes les revendications

| Lieu de la recherche | Date d'achèvement de la recherche | Examinateur |
|---|---|---|
| LA HAYE | 9 septembre 1997 | Perez Molina, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

10